Europäisches Patentamt

European Patent Office

Office européen des brevets

(19)

(11) **EP 0 761 593 A1**

(12) **EUROPÄISCHE PATENTANMELDUNG**

(43) Veröffentlichungstag:
12.03.1997 Patentblatt 1997/11

(51) Int. Cl.⁶: **C01B 7/04**

(21) Anmeldenummer: 96114460.7

(22) Anmeldetag: **10.09.1996**

(84) Benannte Vertragsstaaten:
**BE DE ES FR GB NL**

(30) Priorität: **12.09.1995 DE 19533660**

(71) Anmelder: **BASF AKTIENGESELLSCHAFT**
**67056 Ludwigshafen (DE)**

(72) Erfinder:
• **Watzenberger, Otto, Dr.**
**67059 Ludwigshafen (DE)**
• **Agar, David, Dr.**
**68161 Mannheim (DE)**

• **Rieker, Christopher William, Dr.**
**68163 Mannheim (DE)**
• **Hagemeyer, Alfred, Dr.**
**67063 Ludwigshafen (DE)**
• **Schneider, Hans-Michael, Dr.**
**67549 Worms (DE)**

(74) Vertreter: **Isenbruck, Günter, Dr. et al**
**Patent- und Rechtsanwälte Bardehle, Pagenberg**
**und Partner,**
**Postfach 86 06 20**
**81633 München (DE)**

(54) **Verfahren zur Herstellung von Chlor**

(57) In dem Verfahren zur Herstellung von Chlor aus einem Chlorwasserstoff enthaltenden Gas durch Umsetzung in einem einen Deacon-Katalysator enthaltenden Reaktor bei erhöhter Temperatur, vorzugsweise bei 300 bis 450°C, werden

a) in einer ersten Stufe ein Chlorwasserstoff enthaltendes Gas in den Reaktor eingeführt und durch Reaktion zwischen dem Deacon-Katalysator und dem Chlorwasserstoff Wasser und am Katalysator fixierte Chlorverbindungen gebildet, wobei sich die Temperatur im Reaktor um 10 bis 90°C erhöht und man das Wasser aus dem Reaktor abführt und nach Beendigung der ersten Stufe den Reaktor mit einem Inertgas spült und anschließend

b) in einer zweiten Stufe dem Reaktor ein gasförmiges Oxidationsmittel zugeführt, welches eine Umsetzung der zuvor gebildeten Chlorverbindungen unter Freisetzung von Chlor, welches man aus dem Reaktor abführt, ermöglicht und anschließend der Reaktor mit einem Inertgas gespült.

EP 0 761 593 A1

**Beschreibung**

Die vorliegende Erfindung betrifft ein verbessertes Verfahren zur Herstellung von Chlor aus einem Sauerstoff und Chlorwasserstoff enthaltenden Gas durch Umsetzung in einem Deacon-Katalysator enthaltenden Reaktor bei erhöhter Temperatur.

Chlorwasserstoff fällt bei vielen Reaktionen als unerwünschtes Nebenprodukt an und es liegen daher bereits umfangreiche Untersuchungen und Verfahrensvorschläge zur Weiterverarbeitung dieses Nebenproduktes vor. Als Beispiele für Reaktionen, bei denen Chlorwasserstoff als Nebenprodukt anfällt, können die Herstellung von Vinylchlorid bzw. Isocyanaten sowie die Müllverbrennung genannt werden.

Eine Möglichkeit der Weiterverarbeitung besteht in der Umsetzung zu Chlor, welches beispielsweise als Grundoder Zwischenprodukt erneut in Herstellungsverfahren eingesetzt werden kann.

Bei dieser Variante finden unterschiedliche Verfahrensarten Anwendung:

Bei der sogenannten Salzsäureelektrolyse erfolgt die Darstellung von Chlor durch Elektrolyse von wäßrigem Chlorwasserstoff. Für dieses Verfahren benötigt man aufwendige Elektrolysezellen sowie beträchtliche Mengen an Strom für die Elektrolyse. Es gestaltet sich daher verfahrenstechnisch aufwendig und kostenintensiv.

Weitere bekannte Verfahren basieren auf dem Deacon-Prozeß. Bei diesem Verfahren wird Chlorwasserstoff mit Luft im Gegenwart eines Katalysators wie folgt umgesetzt:

$$4 \, HCl + O_2 \rightleftharpoons 2H_2O + 2Cl2$$

Die für diese exotherme Reaktion eingesetzten Katalysatoren werden üblicherweise als Deacon-Katalysatoren bezeichnet und sind in der Literatur umfangreich beschrieben, so z.B. bei Weissermel K., Arpe H.-J., in 'Industrielle Organische Chemie', 3.Auflage, 1988, S.233-234, VCH Verlagsgesellschaft mbH, Weinheim, Allen J.A., Clark A.J., "Oxychlorination Catalysts", Rev. Pure and Appl. Chem.21 (1971) 145-166 und Furusaki S., "Catalytic Oxidation of Hydrogen Chloride in a Fluid Bed Reactor", AIChE Journal, 19(5) (1973) 1009-1016.

In US 2, 204, 733 wird der Deacon-Prozeß in einem Festbettreaktor durchgeführt (Seite 2, Zeilen 38 bis 64 und Fig. 3). Die starke Wärmetönung der Reaktion bewirkt jedoch einen starken lokalen Temperaturanstieg im Katalysatorfestbett, wodurch der Umsatz der Reaktion verringert wird, da das Reaktionsgleichgewicht zu den Edukten verschoben wird. Gemäß der Lehre von D1 wird versucht, dieser Schwierigkeit durch eine Strömungsumkehr innerhalb des Festbettes zu begegnen. Allerdings besitzen die eingesetzten Katalysatoren bei den hier auftretenden Temperaturen aufgrund ihres Dampfdruckes bereits eine beträchtliche Flüchtigkeit - manche Komponenten können an Stellen stark erhöhter Temperatur als aggressive Schmelze vorliegen -, sodaß es innerhalb des Festbettes zu kaum steuerbaren Konzentrationsverschiebungen am Katalysator kommt. Durch diese Inhomogenitäten wird der Umsatz weiter reduziert. Weiterhin kann das Katalysator-Festbett durch abgeschiedenen Katalysator verstopft werden.

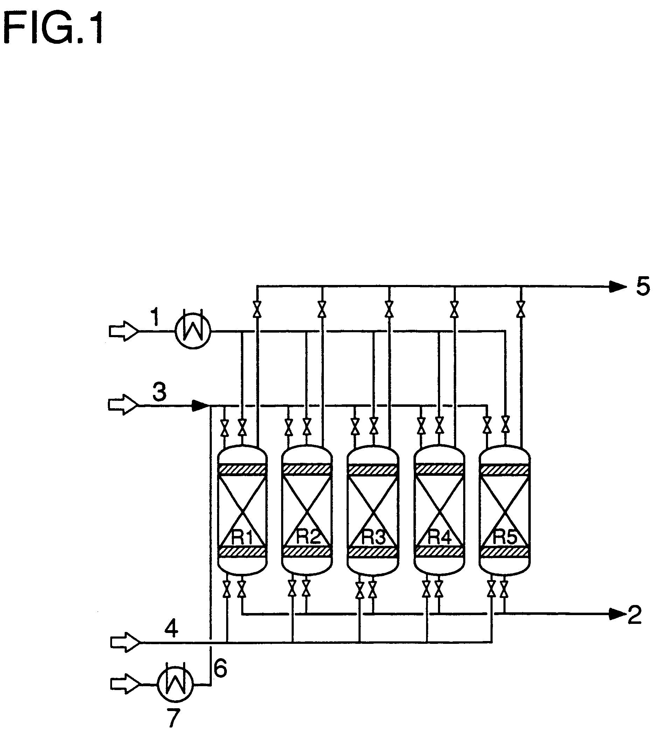

In EP-A 331 465 wird ein Wirbelschichtverfahren beschrieben, bei welchem man mittels perforierter Platten die unerwünschte Ausbildung großer Gasblasen unterbinden will. (Seite 2, Zeilen 55 bis Seite 3, Zeile 56, Figur 1). Die mit diesem Verfahren erzielten Umsätze betrugen maximal lediglich 83 % und die Temperatur im Reaktor lag bei etwa 360 bis 400°C.

Aufgrund der bei Wirbelschichtreaktoren auftretenden hohen dynamischen Belastungen sowie der hohen Aggressivität der Einsatzstoffe sind die für dieses Verfahren benötigten Reaktoren jedoch technisch aufwendig und kostenintensiv. Weiterhin wird nicht umgesetzter Chlorwasserstoff sowie Abrieb aus der Wirbelschicht ausgetragen und muß entsprechend mit großem Aufwand aufbereitet werden und durch Austrag verlorengegangener Katalysator ist zu ersetzen.

Auch in EP-B 474 763 wird ein Wirbelschichtverfahren beschrieben, bei welchem die oben genannten Nachteile auftreten.

In US 2,577,808 wird ein mehrstufiges Fließbett-Verfahren beschrieben (Spalte 3, Zeile 65 bis Spalte 5, Zeile 18, Figur). Die Katalysatorschüttung passiert nach einer Vorwärm- bzw. Abkühlzone eine Chlorierungszone, in welcher der Chlorwasserstoff mit dem Katalysator zu chlorierten Katalysatorverbindungen umgesetzt wird. In der sich anschließenden Oxidationszone erfolgt die Weiterreaktion der chlorierten Katalysatorverbindungen mit Sauerstoff unter Freisetzung von Chlor. Die Katalysatorschüttung wird pneumatisch in die erste Zone zurückgeführt.

Auch bei diesem Fließbettverfahren kann ein unerwünschter Abtrieb nicht vermieden werden und aufgrund der hohen mechanischen Belastung des Reaktors läßt sich in Gegenwart der aggressiven Einsatzstoffe eine Korrosion nicht gänzlich unterbinden. Weiterhin kann der Umsatz durch Rückvermischungseffekte reduziert werden und zur Verbesserung der Ausbeute sollten die einzelnen Zonen bei unterschiedlichen Temperaturen betrieben werden, was den Aufwand bei diesem Verfahren weiter steigert. Weiterhin besteht die Gefahr, Chlorwasserstoff bzw. Chlor oder Wasser in die anderen Reaktionszonen einzuschleppen. Ein weiterer Nachteil besteht darin, daß bei diesem Verfahren mit Chlor versetzte Prozeßabgase anfallen, welche entsprechend aufwendig aufbereitet werden müssen.

In EP-B 500 728 wird ein zweistufiges Verfahren zur Herstellung von Chlor aus HCl beschrieben. Die Chlorierung erfolgt bei relativ niedrigen Temperaturen von 25 bis 250°C und die Dechlorierung bei Temperaturen von mindestens 300°C (Anspruch 1). Daher ist ein ständiges Aufheizen bzw. Abkühlen einer großen Feststoffmenge erforderlich (Spalte 9, Zeilen 16 bis 19, 54 bis 58). Dieses Erfordernis schränkt weiterhin die Möglichkeiten der Gestaltung eines korrosionsbeständigen Reaktors ein.

Es stellte sich somit die Aufgabe, ein Verfahren zu finden, das den genannten Nachteilen abhilft und welches es ermöglicht, die Herstellung von Chlor verfahrenstechnisch einfacher durchzuführen.

Demgemäß wurde ein Verfahren zur Herstellung von Chlor aus einem Chlorwasserstoff enthaltenden Gas durch Umsetzung in einem einen Deacon-Katalysator enthaltenden Reaktor bei erhöhter Temperatur, vorzugsweise bei 300 bis 450°C, gefunden, welches dadurch gekennzeichnet ist, daß man

a) in einer ersten Stufe ein Chlorwasserstoff enthaltendes Gas in den Reaktor einführt und durch Reaktion zwischen dem Deacon-Katalysator und dem Chlorwasserstoff Wasser und am Katalysator fixierte Chlorverbindungen gebildet werden, wobei sich die Temperatur im Reaktor um 10 bis 90°C erhöht und man das Wasser aus dem Reaktor abführt und nach Beendigung der ersten Stufe den Reaktor mit einem Inertgas spült und anschließend

b) in einer zweiten Stufe dem Reaktor ein gasförmiges Oxidationsmittel zuführt, welches eine Umsetzung der zuvor gebildeten Chlorverbindungen unter Freisetzung von Chlor, welches man aus dem Reaktor abführt, ermöglicht und anschließend den Reaktor mit einem Inertgas spült. Weiterhin umfaßt die Erfindung Reaktoren zur Durchführung des Verfahrens.

Bei dem erfindungsgemäßen, zweistufigen, heterogen-katalytischem Verfahren wird ein Deacon-Katalysator als Festbett eingesetzt.

Der Träger-Katalysator setzt sich bevorzugt zusammen aus

- einzelnen oder mehreren Aktivmetallkomponenten, die in oxidischer oder chloridischer Form vorgelegt werden, ausgewählt aus der Gruppe Cu, Fe, Ru, Ce, Bi, Ni, Co, Ga, Nd,

- einzelnen oder mehreren Alkalimetallchloriden, ausgewählt aus der Gruppe LiCl, NaCl, KCl,

und/oder $ZnCl_2$

und/oder $CaCl_2$

- auf keramischen, silikatischen oder Glasträgern,

wobei die Aktivkomponentenbeladung, berechnet als Gewichtsanteile der Metalle, zwischen 2 bis 30 Gew.-%, bevorzugt zwischen 5 bis 20 Gew.-%, und die Alkalichloridbeladung zwischen 0 bis 30 Gew.-% Alkalichlorid, bevorzugt zwischen 0 bis 20 Gew.-% liegt.

Bevorzugte Trägersysteme basieren auf keramischen Trägern, ausgewählt aus der Gruppe SiC, $Si_3N_4$, BN, $B_4C$, WC, TiC, TiN, ZrN, AlN, besonders bevorzugt SiC und/oder $Si_3N_4$.

Besonders bevorzugt sind makroporöse keramische Träger, vorzugsweise makroporöse SiC- und/oder $Si_3N_4$-Träger.

Der Katalysator besteht aus einer aggressiven Salzschmelze (z.B. $CuCl_2$-KCl-$FeCl_3$-NaCl) auf einem Träger (SLP-Katalysator = supported liquid phase), so daß an die Stabilität des Trägers höchste Anforderungen gestellt werden. Die Reaktionstemperatur liegt um 400°C. Silikate wie auch $SiO_2$ sind allerdings chemisch nicht stabil gegen die aggressive Salzschmelze des Katalysators und ergeben nur unzureichende Standzeiten. Träger aus keramischen Materialien erfüllen dagegen alle Anforderungen sowohl bezüglich geringer HCl-Adsorption als auch bezüglich Stabilität und sind daher für den erfindungsgemäßen Prozeß besonders gut geeignet.

Ein besonders bevorzugter Katalysator besteht aus einer Cu/Fe-Aktivmetallmischung mit einem atomaren Cu/Fe-Verhältnis zwischen 1:9 und 9:1. einer KCl- und/oder NaCl-Salzkomponente, auf einem makroporösen SiC- und/oder $Si_3N_4$-Träger.

Die Alkalichloride bilden mit den Aktivmetallen bei Reaktionstemperatur Salzschmelzen, die den Träger bedecken (SLP-Katalysator = supported liquid phase). Dadurch wird der Aktivkomponentenaustrag verringert und die Aktivmetallverteilung verbessert. Besonders geeignet sind beispielsweise Mischungen in der Nähe der jeweiligen eutektischen Punkte, wie z.B. $CuCl_2$:KCl und $FeCl_3$:NaCl.

Ein hervorragend geeigneter Katalysator besteht demzufolge aus einer $CuCl_2$/KCl-Salzschmelze mit Cu/K-Verhältnis zwischen 3:1 bis 1:3 und ebenfalls einer $FeCl_3$/NaCl-Salzschmelze mit Fe/Na-Verhältnis zwischen 3:1 bis 1:3, wobei das Cu/Fe-Verhältnis zwischen 3:1 und 1:3 und die gesamte (CU+Fe)-Aktivmetallbeladung zwischen 5 und 20 Gew.-% liegt.

Der Katalysator kann nach bekannten Methoden hergestellt werden. Bei Verwendung von Chlorid-Precursoren, also löslichen Salzen, bietet sich eine Präparation durch Tränken an. Es kann natürlich auch von anderen Precursoren ausgegangen werden (Nitraten, Carbonaten, Hydroxiden, Acetaten, etc.). Da für eine hohe Aktivmetallbeladung i.a. mehrmaliges Tränken notwendig ist, kann auf einfache Weise, nämlich Tränken mit unterschiedlichen Salzlösungen, bewußt eine ungleichmäßige Aktivmetallverteilung über den Kornquerschnitt erreicht werden. Durch Vortränken mit Cu-Salzlösung und Nachtränken mit Fe-Salzlösung kann z.B. ein Cu-reicher Kern und eine Fe-reiche Schale im Korn eingestellt werden.

Die Katalysatoren für das erfindungsgemäße Verfahren können beispielsweise wie folgt hergestellt werden:

In einer Mischvorrichtung, bevorzugt mit Heizvorrichtung, beispielsweise einem Kneter, einem Extruder oder einem Scherwalzen-extruder kann dem Polymer der Komponente B) (Komponenten wie weiter unten definiert) in geschmolzenem Zustand bei Temperaturen von 80 bis 250°C, bevorzugt 100 bis 220°C, besonders bevorzugt 120 bis 200°C die Komponente A), die anorganischen und/oder metallischen Pulver und gegebenenfalls die Aktivkomponenten und dann das Dispergierhilfsmittel der Komponente C) oder zuerst Komponente C) und dann Komponente A) oder die Komponenten A) und C) gemeinsam zugegeben werden. Die innig (intensiv) vermischten Massen können z.B. durch Pressen, Verstrangen, oder Spritzgießen, insbesondere durch Spritzgießen bei Temperaturen von 120 bis 250°C, bevorzugt 140 bis 220°C, besonders bevorzugt 150 bis 200°C und Drücken von 500 bis 2000 bar, bevorzugt 600 bis 1800 bar, besonders bevorzugt 700 bis 1600 bar verformt werden. Dabei können in einem Formgebungsschritt bei Werkzeug-(Preßform-)temperaturen von 40 bis 160°C, bevorzugt 60 bis 150°C, besonders bevorzugt 80 bis 140°C beliebig geformte Katalysatorträger oder Katalysatoren wie beispielsweise Raschig Ringe, Wagenräderprofile, Fensterrahmenprofile, Honigwabenprofile, Sattelkörper, Sternringe, gelochte und/oder gerippte geometrische Körper wie Kugeln, Quader, Würfel, Kegel, Pyramiden, Prismen, Oktaeder, Zylinder, Pyramidenstümpfe und Kegelstümpfe.

Die nach dem Formgebungsvorgang erhaltenen Grünkörper können

I) durch Pyrolyse bei 300 bis 600°C, bevorzugt 350 bis 600°C, besonders bevorzugt 400 bis 600°C behandelt

II) in einer gasförmigen, säurehaltigen Atmosphäre bei Temperaturen von 100 bis 160°C, bevorzugt 100 bis 150°C, besonders bevorzugt unter der Erweichungstemperatur der Komponente B, bevorzugt einem Polyacetal, katalytisch entbinden werden.

Die entformten Grünlinge werden in einer (gasförmigen) säurehaltigen Atmosphäre zwecks Entfernung des Bindemittels behandelt. Unter (gasförmigen) säurehaltigen Atmosphären können sowohl solche aus reinen Säuren verstanden werden, die bei den Behandlungstemperaturen gasförmig vorliegen, es können aber auch darunter solche aus Mischungen von Säuren mit einem Trägergas verstanden werden. Als Trägergase kommen beispielsweise Luft oder Stickstoff oder Edelgase in Betracht. Als Säuren kommen die anorganischen Säuren in Betracht, die bei Raumtemperatur gasförmig sind, z.B. die Halogenwasserstoffe, Schwefelwasserstoff oder solche Säuren, die bei den Behandlungstemperaturen in merklichem Umfang verdampfbar sind, z.B. Salpetersäure.

Als organische Säuren kommen grundsätzlich solche Säuren in Betracht, die einen Siedepunkt oder Sublimationspunkt bei Normaldruck von unter 130°C haben, z.B. Oxalsäure, Ameisensäure, Essigsäure oder Trifluoressigsäure.

Anstelle der gasförmigen, säurehaltigen Atmosphäre können aber die entformten Grünlinge auch in einer gasförmigen Bortrifluorid enthaltenden Atmosphäre zwecks Entfernung des Bindemittels behandelt werden. Unter gasförmigen Bortrifluorid enthaltenden Atmosphären kann sowohl reines Bortrifluorid verstanden werden, es können aber auch darunter Mischungen von Bortrifluorid mit einem Trägergas verstanden werden. Als Trägergase kommen beispielsweise Luft oder Stickstoff oder Edelgase in Betracht.

Anstelle von Bortrifluorid können selbstverständlich auch Addukte von Bortrifluorid verwendet werden, die bei den Behandlungstemperaturen reversibel und ohne Zersetzung der Komponenten wieder in die Ausgangskomponenten gespalten werden können. Insbesondere geeignet sind die Additionsverbindungen des Bortrifluorids mit Ether, z.B. Dimethylether, Diethylether, Dibutylether und tert.-Butylmethylether.

Besonders bevorzugt sind wasserfreie Oxalsäure oder Oxalsäuredihydrat. Weiterhin eignet sich Glyoxalsäure. Außerdem kommen Benzolsulfonsäure, die Naphthalinsulfonsäuren und Maleinsäure oder Gemische dieser Säuren in Betracht. Diese können sowohl für sich allein oder auch zusammen mit einem Trägergas wie Luft, Stickstoff oder einem Edelgas bei der Entbinderung eingesetzt werden.

Die Säuren gelangen bei der Entbinderungstemperatur zunächst in die Gasphase, wirken von hier auf das Bindemittel ein und desublimeren oder erstarren nach Abkühlung an den Wandungen der Entbinderungsvorrichtung. In einem anschließenden Entbinderungsvorgang gelangen sie wieder in die Gasphase, d.h. die Säure verläßt die Vorrichtung praktisch nicht.

Zur Erleichterung der Dosierung kann es zweckmäßig sein, die obengenannten Säuren als Lösung in polaren Lösungsmitteln, vorzugsweise mit Siedepunkten unter 200°C, einzusetzen. Als solche kommen vor allem Aceton, Dioxan, Ethanol, Essigsäure und Ameisensäure in Betracht.

Die säurekatalysierte Entbinderung kann bei Normaldruck oder bei vermindertem Druck (0,001 bis 1bar) durchgeführt werden.

Durch anschließendes Vorsintern, in der Regel bei Temperaturen von 600 bis 1400°C, bevorzugt 600 bis 1100°C, besonders bevorzugt bei 600 bis 800°C unter oxidierenden Bedingungen (Luft), Inertgas ($N_2$, Ar, He) oder unter reduzierenden Bedingungen ($N_2/H_2$, $Ar/H_2$) kann der Formkörper zu den Katalysatoren mit ihrer endgültigen Festigkeit und Porenverteilung umgewandelt werden. Durch den Vorsinterprozeß erhöht sich in der Regel die Stabilität und die Härte der porösen Formkörper beträchtlich. Die Schneidehärte beträgt in der Regel 1 bis 5 kg (800°C), bevorzugt 1,5 bis 4 kg (800°C), besonders bevorzugt 2 bis 3,5 kg (800°C). Die Wasseraufnahme liegt in der Regel im Bereich von 0,05 bis 5 ml/g, bevorzugt 0,1 bis 3ml/g, besonders bevorzugt 0,1 bis 1 ml/g, so daß mehr Aktivkomponente auf einen Katalysatorträger aufgebracht werden kann, ohne in der Regel wesentliche Einbußen in der Härte zu erzielen. Neben streng monomodalen Porengrößenverteilungen können so auch polymodale (bimodale, trimodale, tetramodale und höher modale) Porengrößenverteilungen hergestellt werden. Mit diesem Verfahren können Katalysatorträger und Katalysatoren mit einer hohen Festigkeit und einer hohen thermischen bzw. chemischen Stabilität hergestellt werden. Als Geometrien der Formkörper sind alle Formen denkbar, die über Granulierung, Walzen, Pressen, Strangpressen, Extrusion oder Spritzguß herstellbar sind.

Die mittlere Porengröße wird in der Regel von der Korngröße der Komponente A), der anorganischen, metallischen, organischen Pulver und/oder der Aktivkomponenten in der Regel nur durch die Zwischenräume der eingesetzten Pulverteilchen bestimmt. Die mittlere Porengröße und die Porengrößenverteilung sind deshalb von der mittleren Korngröße und der Teilchengrößenverteilung des eingesetzten Pulvers abhängig. Mit kommerziell erhältlichen Metall- oder Keramikpulvern können auf diese Weise mechanisch stabile, rißfreie, monomodal oder polymodal poröse Materialien, wie die Katalysatorträger oder Katalysatoren, hergestellt werden. Die enge Porengrößenverteilung kann somit je nach Bedarf im Meso- und Makroporenbereich eingestellt werden und führt in der Regel zu einer hoch monodispersen Porenverteilung.

Die spezifischen Oberflächen nach BET (Brunnauer, Emmet, Teller) der so hergestellten Katalysatorträger und Katalysatoren liegen in der Regel bei 0,01 bis 250 $m^2$/g, bevorzugt 0,1 und 150 $m^2$/g, besonders bevorzugt 1 und 90 $m^2$/g, insbesondere 2 bis 8 $m^2$/g (800°C).

Die mittlere Porengröße wird in der Regel von der Korngröße der Komponente A), der anorganischen und/oder metallischen Pulver und gegebenenfalls der Aktivkomponenten in der Regel nur durch die Zwischenräume der eingesetzten Pulverteilchen bestimmt. Die mittlere Porengröße und die Porengrößenverteilung sind deshalb von der mittleren Korngröße und der Teilchengrößenverteilung des eingesetzten Pulvers abhängig. Mit kommerziell erhältlichen Metall- oder Keramikpulvern können auf diese Weise mechanisch stabile, rißfreie, monomodal oder polymodal poröse Materialien, wie die Katalysatorträger oder Katalysatoren, hergestellt werden. Die enge Porengrößenverteilung kann somit je nach Bedarf im Meso- und Makroporenbereich eingestellt werden und führt in der Regel zu einer hoch monodispersen Porenverteilung.

Die mittlere Korngröße der eingesetzten Pulver der Komponente A) kann in der Regel ein nanokristallines Pulver von 5 bis 500.000 nm, bevorzugt 3 bis 100.000 nm, besonders bevorzugt 2 bis 50.000 nm sein, wobei die Abweichungen der Korngröße bei 80 %, bevorzugt 90 %, besonders bevorzugt 95 % der Körner 0 bis 30 %, bevorzugt 0 bis 20 %, besonders bevorzugt 0 bis 10 % von der mittleren Korngröße beträgt.

Als Komponente A) eignen sich beispielsweise:

AI) keramische Pulver ausgewählt aus der Gruppe SiC, $Si_3N_4$, BN, $B_4C$, WC, TiC, TiN, ZrN, AlN oder deren Gemische, bevorzugt SiC, $Si_3N_4$, WC, TiC, TiN, ZrN oder deren Gemische, besonders bevorzugt SiC, $Si_3N_4$ oder deren Gemische und/oder

AII) silikatische Pulver ausgewählt aus Metallen der Elemente Berylium, Magnesium, Calcium, Eisen, Cobalt, Nikkel, Kupfer, Zink, Titan, Zirkon, Vanadin, Niob, Tantal, Chrom, Molybdän, Wolfram, Mangan, Cer und Siliciumdioxid oder deren Gemische, bevorzugt Metallen der Elemente Magnesium, Calcium, Eisen, Zink, Titan, Zirkon und Siliciumdioxid oder deren Gemische, besonders bevorzugt Metallen der Elemente Magnesium, Calcium, Eisen, Zink und Siliciumdioxid oder deren Gemische, insbesondere SiC und $Si_3N_4$ oder deren Gemische und gegebenenfalls

AIII) einer Aktivkomponente ausgewählt aus der Gruppe der Chloride oder Oxide der Elemente Kupfer, Eisen, Cobalt, Nickel, Ruthenium, Cer, Bismut, Gallium, Neodym oder deren Gemische, bevorzugt Kupfer, Eisen, Cobalt, Nickel, Ruthenium oder deren Gemische, besonders bevorzugt Kupfer und Eisen oder deren Gemische und gegebenenfalls

AIV) Chloride der Elemente Lithium, Natrium, Kalium, Zink oder deren Gemische, bevorzugt Lithium, Natrium, Kalium oder deren Gemische, besonders bevorzugt Natrium und Kalium oder deren Gemische.

Sollen Vollkatalysatoren hergestellt werden, so beinhaltet die Komponente A) nur Aktivkomponenten AIII) und gegebenenfalls Komponente AIV).

Als Komponente B) eignen sich beispielsweise:

BI) nur für die Pyrolyse Polyethylen- oder Polypropylenpolymere oder Copolymere aus Ethylen, Propylen, Buten-1 oder Isobuten oder Polystyrolcopolymere oder Polymethylmethacrylatcopolymere oder Polyethylenoxidcopolymere oder Ethylenvinylacetatcopolymere oder Mischungen aus

BII) für die Pyrolyse und Säurekatalyse

$B_1$) 50 bis 100 Gew.-%, bevorzugt 70 bis 90 Gew.-%, besonders bevorzugt 80 bis 88 Gew.-% eines Polyoximethylenhomo- oder copolymerisats wie sie z.B. aus EP-A-444 475 bekannt sind und

$B_2$) 0 bis 50 Gew.-%, bevorzugt 10 bis 30 Gew.-%, besonders bevorzugt 12 bis 25 Gew.-% eines in $B_1$) homogen gelösten oder mit einer mittleren Teilchengröße von weniger als 1 μm in $B_1$) dispergierten Polymerisats, bevorzugt Poly-1,3-dioxolan, Poly-1,3-dioxan, Poly-1,3-dioxepan, besonders bevorzugt Poly-1,3-dioxepan.

Der organische Binder kann auch aus Mischungen ein oder mehrerer thermoplastischer Harze, wie Polyacetal, Polyethylen, Polypropylen, Polystyrol, Polymethylmethacrylat und ein oder mehreren Weichmachern, wie Polyethylenglykol, Polypropylenglykol, Polybutandiolformal, Phthalsäureestern, Ethylen-Vinylacetat-Copolymeren und Montanesterwachsen bestehen.

Als Polyacetalbinder eignet sich beispielsweise Polyoxymethylen, das vorteilhaft eine Molmasse von 10.000 bis 500.000 aufweist. Neben Homopolymerisaten von Formaldehyd oder Trioxan kommen auch Copolymerisate aus Trioxan mit z.B. cyclischen Ethern wie Ethylenoxid und 1,3-Dioxolan oder Formalen wie 1,3-Dioxepan, 1,3-Dioxan, oder deren Mischungen oder homopolymeres Poly-1,3-dioxolan, Poly-1,3-dioxan, oder Poly-1,3-dioxepan in Betracht, wobei die Mengen der Copolymeren im allgemeinen bei 10 bis 30 Gew.-% der Polymeren liegen.

Außerdem kann die Komponente B) Hilfsmittel, wie thermoplastische Binder, wie Polyethylen, Polymethylmethacrylat oder Polyethylenoxid und Dispergatoren bzw. Schmiermittel, wie Polyethylenglykol, Stearinsäure, Fettalkohole, Polyvinylpyrrolidon oder Polyvinylalkohol enthalten. Die Menge an Hilfsmittel liegt in der Regel zwischen 0,1 und 12 Gew.-% der Gesamtmasse.

Als Komponente C) eignen sich Dispergierhilfsmittels wie sie z.B. aus EP-A-444 475 bekannt sind, beispielsweise organische Carbonsäuren, Amine, Amide oder Maleinimide, Stearinsäure, Polyvinylpyrrolidon, Polyvinylalkohol, Polyethylenglykol, Polypropylenglykol, Polyethylenoxid und Montanwachse, bevorzugt organische Carbonsäuren, Amine, Amide oder Maleinimide, Polyethylenglykol und Polyethylenoxid, besonders bevorzugt organische Carbonsäuren, Amine, Maleinimide, Polyethylenglykol und Polyethylenoxid.

Die zur Herstellung (Zusammenmischung) der Katalysatoren eingesetzten Gemische enthalten oder bestehen in der Regel bevorzugt aus 15 bis 70 Gew.-%, bevorzugt 30 bis 70 Gew.-%, besonders bevorzugt 50 bis 65 Gew.-% Komponente A), aus 30 bis 85 Gew.-%, bevorzugt 30 bis 70 Gew.-%, besonders bevorzugt 35 bis 50 Gew.-% Komponente B) und aus 0 bis 15 Gew.-%, bevorzugt 1 bis 12 Gew.-%, besonders bevorzugt 2 bis 8 Gew.-% Komponente C).

Die Aktivkomponenten können im Falle des Vollkatalysators direkt als Pulver eingesetzt oder im Falle von Trägerkatalysatoren nachträglich auf das Trägermaterial beispielsweise durch Tränken aufgebracht, oder zusammen mit dem Trägermaterial compoundiert werden.

Bei dem Herstellverfahren werden in der Regel mit Hilfe eines Dispergators C) die Komponenten A) desagglomeriert und damit die einheitlich großen Ausgangspulverpartikel mit einem vergleichsweise hohen Füllgrad in einen organischen Binder [Komponente B)] eingearbeitet. Der organische Binder füllt die in der Regel nahezu einheitlich großen und regelmäßig angeordneten Zwischenräume der Pulverpartikel. Die bei dem Ausgangspulver der Komponente A) durch Agglomeratbildung vorhandenen Makroporen im Bereich um 100 μm werden durch die Desagglomerierung in der Regel aufgehoben. Nach der Entfernung des organischen Binders und des organischen Dispergators bleiben bei Einsatz von Pulver mit einer engen monomosalen Korngrößenverteilung streng einheitlich große Poren zwischen den Pulverteilchen zurück. Beim Einsatz von Pulvern mit polymodaler Korngrößenverteilung oder beim Einsatz von porösen Pulvern können auch polymodale (bimodale, trimoldale, tetramodale oder höhermodale) Porenverteilungen hergestellt werden, wobei die Porengröße durch die Zwischenräume zwischen den Pulverteilchen und durch die innere Porosität der Pulverteilchen bedingt ist.

Die Katalysatoren können heterogene Trägerkatalysatoren oder Vollkatalysatoren sein. Vollkatalysatoren bestehen aus katalytisch aktivem Material. Trägerkatalysatoren können durch Beschichtung von inerten porösen keramischen oder metallischen Katalysatorträgern mit katalytisch aktiven Komponenten oder Precursoren von katalytisch aktiven Komponenten durch Tränken, Sprühimprägnieren, Sprühtrocknen, Auffällen, Hicoaten, Washcoaten hergestellt werden. Bevorzugt wird nach jedem Tränkschritt der Katalysator getrocknet.

Die nach Pyrolyse erhältlichen Katalysatoren haben eine Porengrößenverteilung von 50 bis 100.000nm gemessen mit der Hg-Druckporosimetrie-Methode und

a) 10 bis 95 % des Porenvolumens liegt bei dem 0,2- bis 100-fachen und/oder

b) 10 bis 80 % des Porenvolumens liegt bei dem 0,5- bis 100-fachen und/oder

c) 50 bis 95 % des Porenvolumens liegt bei dem 0,2- bis 1-fachen und/oder

d) 50 bis 80 % des Porenvolumens liegt bei dem 0,5- bis 1-fachen des mittleren Porendurchmessers und

e) die Halbwertsbreite der Porengrößenverteilung beträgt weniger als das 0,5-fache des mittleren Porendurchmessers.

Die nach Säurekatalyse und anschließender Pyrolyse erhältlichen Katalysatoren haben eine Porengrößenverteilung von 50 bis 100.000 nm gemessen mit der Hg-Druckporosimetrie-Methode und

a) 10 bis 95 % des Porenvolumens liegt bei dem 0,2- bis 2-fachen und/oder
b) 10 bis 80 % des Porenvolumens liegt bei dem 0,5- bis 2-fachen und/oder
c) 50 bis 95 % des Porenvolumens liegt bei dem 0,2- bis 1-fachen und/oder
d) 50 bis 80 % des Porenvolumens liegt bei dem 0,5- bis 1-fachen des mittleren Porendurchmessers und
e) die Halbwertsbreite der Porengrößenverteilung beträgt weniger als das 0,5-fache des mittleren Porendurchmessers.

Der Träger zeichnet sich durch erhöhte Härte aus. Diese hohe Härte ermöglicht ein mehrfaches Tränken des Trägers mit katalytisch aktiven Komponenten und damit eine hohe Aktivmetallbeladung. Die hergestellten Träger zeigen eine sehr gute Wasseraufnahme im Bereich 0,1 bis 1,0 ml/g, so daß im Vergleich zu konventionellen Trägern mehr Aktivkomponente aufgebracht werden kann.

Bei Verwendung von Chloriden bei den Aktivkomponenten bietet sich eine Präparation durch Tränken an. Es kann natürlich auch von anderen Precursoren ausgegangen werden (Nitraten, Carbonaten, Hydroxiden, Acetaten, etc.).

Da für eine hohe Aktivmetallbeladung in der Regel mehrmaliges Tränken notwendig ist, kann auf einfache Weise, nämlich durch Tränken mit unterschiedlichen Salzlösungen, bewußt eine ungleichmäßige Aktivmetallverteilung über den Kornquerschnitt erreicht werden. Durch Vortränken mit Cu-Salz-Lösung und Nachtränken mit Fe-Salz-Lösung kann z.B. ein Cu-reicher Kern und eine Fe-reiche Schale im Korn eingestellt werden.

Die Festbettschüttung kann neben dem Katalysator noch Vor- oder Nachschüttungen enthalten. Bevorzugt sind Nachschüttungen aus reinem Trägermaterial, mit Alkalichlorid beladenem Trägermaterial oder aus Cr-beladenem Trägermaterial.

Ferner kann für die Katalysatorschüttung selbst eine Gradientenschüttung aus verschiedenen, in Serie geschalteten Kontakten herangezogen werden, wobei für die einzelnen Fraktionen sowohl die Aktivmetallbeladung als auch (simultan) die Aktivmetallverteilung variiert werden kann.

Der Ablauf des erfindungsgemäßen Verfahrens läßt sich aus Beispiel eines Cu-Katalysators - stark vereinfacht - wie folgt darstellen:

**Chlorierung**

In der ersten Stufe wird der in das Festbett eingebrachte Chlorwasserstoff an dem Katalysator chemisch gebunden und Wasser wird bei dieser exothermen Reaktion freigesetzt und aus dem Reaktor ausgetragen.

$$CuO + 2HCl \rightarrow CuCl_2 + H_2O$$

**Oxidation**

In der zweiten Stufe wird das zwischengespeicherte Chlor durch Zugabe eines sauerstoffhaltigen Gases, vorzugsweise Sauerstoff oder Luft, wieder freigesetzt und während dieser endothermen Reaktion fällt ein nahezu wasser- und chlorwasserstoffreier Chlorgasstrom an.

$$CuCl_2 + 0,5 O_2 \rightarrow CuO + Cl_2$$

Die hier angegebenen Reaktionen veranschaulichen nur das Prinzip der Reaktionsfolge. Auf andere geeignete Deacon-Katalysatoren ist dieses Reaktionsprinzip übertragbar. Die tatsächlich ablaufenden Reaktionsschritte sind bei allen Katalysatorsystemen bekanntermaßen aufgrund sich ausbildender Zwischenprodukte wesentlich komplexer.

Das erfindungsgemäße Verfahren kann mit einem oder bevorzugt mehreren verschalteten Festbettreaktoren durchgeführt werden. Die Anzahl und Verschaltung der Reaktoren wird von der durch den verwendeten Katalysator vorgegebenen Reaktionskinetik und durch die Anforderungen an den Prozeß wesentlich bestimmt. Die Gesamtaus-

EP 0 761 593 A1

beute läßt sich beispielsweise dadurch optimieren, daß man dieAnzahl oder Größe der Reaktoren im limitierenden Teilschritt erhöht.

Im folgenden wird das erfindungsgemäße Verfahren schematisch anhand der Figur näher beschrieben. Hierbei sind beispielhaft fünf verschaltete Festbettreaktoren dargestellt. Alle Festbettreaktoren wurden zu Beginn des erfindungsgemäßen Verfahrens einmalig auf eine Temperatur von etwa 300 bis 450°C, bevorzugt 340 bis 420°C vorgewärmt.

In jedem Festbettreaktor laufen nacheinander folgende Schritte ab:

**1. Chlorierung**

Der Chlorwasserstoff wird bei Umgebungstemperatur oder wahlweise mit erhöhter Temperatur konzentriert oder wahlweise mit Inertgas verdünnt über die Versorgungsleitung 1 in den Festbettreaktor geleitet, der sich gerade im Chlorierungsmodus befindet. Der erste Teil der Schüttung und der Ausgangsteil des Reaktors können aus einer Katalysatorschüttung oder vorzugsweise aus einer Inertmaterialschüttung (etwa 20 bis 100 cm) bestehen. In der Reaktoreingangszone findet das Aufheizen des eingesetzten HCl an der heißen Schüttung regenerativ auf Reaktionstemperatur, vorzugsweise 300 bis 450°C, besonders bevorzugt 340 bis 420°C, statt. Das vorgewärmte HCl-Gas reagiert in der nachfolgenden Katalysatorschüttung mit den Metalloxidkomponenten unter Bildung der entsprechenden Chloride und der Freisetzung des entstehenden Reaktionswassers. Die HCl-Umsetzung wandert in Form einer verfahrenstechnisch vorteilhaften scharfen Reaktionsfront durch das Katalysatorbett. Die freiwerdende Reaktionswärme wird im Katalysatorbett gespeichert. Hinter der Reaktionsfront wandert dadurch eine Temperaturfront durch den Reaktor. Die lokale Temperaturerhöhung wird im wesentlichen durch die lokale Konzentration an reagierender Aktivkomponente im Katalysator bestimmt. Der Temperaturanstieg liegt bei dem erfindungsgemäßen Verfahren im Bereich von etwa 10 bis 90°C, vorteilhafterweise im Bereich von etwa 30 bis 60°C. Er ist durch die Katalysatorzusammensetzung und durch den Inertgehalt der Schüttung einstellbar. Die Chlorierungsstarttemperatur wird so mit der Chlorspeicherkapazität des Katalysators abgestimmt, daß gegen Ende der Chlorierung auch im wärmsten Teil des Festbettreaktors eine Maximaltemperatur im Bereich von etwa 380°C bis 450°C, bevorzugt kleiner als 410°C, nicht überschritten wird. Dadurch wird der potentiellen Gefahr der Verflüchtigung der Übergangschloride vorgebeugt. Die bei der Reaktion freigesetzte Wärme bleibt im Reaktor gespeichert. Die Temperatur des Katalysatorbettes erhöht sich während der Umsetzung um etwa die oben genannte Temperaturdifferenz. Es stellt sich ein zum Reaktorausgang hin ansteigendes Temperaturprofil im Reaktor ein. Das Festbett fungiert als regenerativer Wärmespeicher. Durch den o.g. Temperaturanstieg während der Chlorierung wird Reaktionswärme im Festbett gespeichert. Diese im Festbett gespeicherte Wärmemenge liefert die für die nachfolgende endotherme Dechlorierung benötigte Reaktionswärme. Da die während der Chlorierung freigesetzte Reaktionswärme größer ist als die benötigte Reaktionswärme bei der Dechlorierung können auch Wärmeverluste und der Wärmeaustrag während der Spülphase ausgeglichen werden. Durch den erfindungsgemäßen Temperaturanstieg werden Wärmefreisetzung und Wärmeverbrauch vorteilhafterweise so aufeinander abgestimmt, daß keine externe Beheizung oder Kühlung benötigt wird. Die im Festbett gespeicherte Chlormenge wird im wesentlichen durch den Aktivkomponentengehalt im Katalysator und durch die Katalysatormenge im Reaktor bestimmt. Bedingt durch die einfache Konstruktion kann durch einfache Vergrößerung (Verlängerung) die je Reaktor zu speichernde Menge an Chlor einfach und kostengünstig erhöht werden. Die Dauer der Chlorierung ist vorteilhafterweise, aber nicht notwendigerweise in jedem Zyklus gleich, so daß im technischen Betrieb eine feste Beladungszeit vorgegeben werden kann, die so zu wählen ist, daß die HCl-Zufuhr bereits vor der vollständigen Beladung des Katalysatorbettes mit Chlor beendet wird. Das Ende des Chlorierungsschrittes kann einfach durch die Messung der HCl-Austrittskonzentration detektiert werden. Das aus dem Reaktor austretende Reaktionswasser bzw. der austretende Wasserdampf wird über Leitung 2 gesammelt und abgeführt. Die Anfangstemperatur der Katalysatorschüttung sollte bei der Chlorierung 300 bis 450°C, bevorzugt 340 bis 420°C, betragen.

Es kann sich besonders empfehlen, daß die Chlorierung nicht vollständig bis zum HCl-Durchbruch durchgeführt wird, sondern entsprechend vorher abgebrochen wird, so daß noch genügend umreagiertes Metalloxid im Reaktorausgangsbereich verbleibt, um das im Zuge des Spülvorganges noch durch die Katalysatorschüttung geblasene HCl durch Reaktion zu binden.

Alternativ kann durch Serienschaltung mehrerer Reaktoren die HCl-Beladung über den HCl-Durchbruch hinaus erfolgen, wobei das den ersten Reaktor nach dem HCl-Durchbruch verlassende HCl-haltige Gas in einen zweiten Reaktor geleitet wird, in welchem dieses vollständig abreagiert. Nach Abschluß der Beladungssequenz für den ersten Reaktor wird dieser für die Spülphase freigegeben. Das Spülgas wird in einen der Reaktoren geleitet, die sich im Chlorierungsmodus befinden. Der HCl-Feed wird auf den zweiten Reaktor umgestellt und das den zweiten Reaktor verlassende Rest-HCl wird in eine dritten Reaktor geleitet. Im technischen Prozeß werden bei dieser Variante demnach mindestens drei Festbettreaktoren eingesetzt, wobei sich mindestens zwei Rektoren seriell geschaltet im Chlorierungsmodus befinden und ein Reaktor im Dechlorierungsmodus. Bei Ausführung mit nur drei Reaktoren werden die Spülphasen den Reaktionsphasen im jeweiligen Reaktor zeitlich nachgeschaltet. Vorteilhafter ist jedoch die Verwendung einer höheren Zahl von Reaktoren, um stetigere Gasflüsse zu erreichen. Die einzelnen Phasen müssen zeitlich aufeinander

8

abgestimmt werden, so daß die Reaktoren zeitlich versetzt oder vorzugsweise gleichzeitig periodisch sich wiederholend in den jeweils nachfolgenden Modus umgeschaltet werden können. Durch die HCl-Beladung über den HCl-Durchbruch hinaus erhöht sich die Chloraufnahme des Katalysators und damit der Katalysatorausnutzungsgrad. Die nachfolgende Chlorabspaltung von dem hoch mit Chlor beladenen Katalysator erfolgt rascher und führt zu höheren Chlorgehalten im Dechloriergasstrom.

**2. Spülphase**

Nach dem Ende der Beladung befindet sich in der Gasphase des Reaktors noch nicht umgesetzte HCl. Diese muß vor der nachfolgenden Dechlorierung entfernt werden. Dazu wird der Reaktor mit inertem Spülgas, z.B. $N_2$ über die Spülgasleitung 3 gespült. Die Chlorierung wurde bereits vor dem HCl-Durchbruch abgebrochen. Dadurch verbleibt im Ausgangsbereich des Reaktors noch eine Zone mit einer ausreichenden Chlorspeicherkapazität, um das mit dem Spülgas durch den Reaktor gespülte Rest-HCl aus der Gasphase umzusetzen und die entsprechende Chlormenge zu speichern. Diese Fahrweise verhindert, daß während der Spülphase HCl aus dem Reaktor ausgetragen wird. Die Dauer der Spülphase beträgt mehrere Verweilzeiten und ist beendet, wenn im Reaktorausgang, gegebenenfalls durch Messung bestätigt, praktisch kein HCl und kein Wasser mehr enthalten ist. Die Spüldauer ist im Dauerbetrieb der Anlage vorzugsweise, aber nicht notwendigerweise immer gleich. Die Inertgase werden nach Verlassen des Reaktors ebenfalls über die Sammelleitung 2 abgezogen. Die Spülung kann im Gleich- oder im Gegenstrom erfolgen, vorzugsweise jedoch im Gleichstrom, d.h. in derselben Strömungsrichtung wie die Chlorierung.

Der Spülgang kann durch Variation von Spülgasmenge, Spüldauer bzw. -temperatur dazu genutzt werden, überschüssige Reaktionswärme aus dem Reaktor zu entfernen bzw. zusätzliche Wärme in den Reaktor einzutragen.

Nach jedem Reaktionsschritt wird der Reaktor mit einem geeigneten Inertgas wie $N_2$, $CO_2$ $CH_4$ oder Edelgasen für 0,1 bis 20 Minuten, vorzugsweise 0,2 bis 5 Minuten im Gleich- oder Gegenstrom gespült.

**3. Dechlorierung**

Dem Reaktor wurde durch die exotherme Chlorierung ein zum Reaktorausgang hin ansteigendes Temperaturprofil aufgeprägt. Die Dechlorierung ist endotherm und läuft bevorzugt bei höheren Temperaturen ab. Aus diesem Grunde ist es vorteilhaft im Dechlorierungsschritt den Festbettreaktor in entgegengesetzter Richtung zu durchströmen. Die Temperatur bei der Dechlorierung sollte etwa 300 bis 450°C, bevorzugt 360 bis 420°C, besonders bevorzugt 380 bis 410°C betragen. Das Oxidationsmittel (Luft, Sauerstoff oder ein anderes Oxidationsgas, z.B. $N_2O$) wird dazu über die Oxidationsgasleitung 4 in das andere Ende des Reaktors eingeleitet, wo es sich in der Inertschüttung auf Reaktionstemperatur aufheizt. Die Katalysatoroxidation und damit die Chlorfreisetzung wandert ebenfalls in Form einer Reaktionsfront durch den Reaktor. Die Dechlorierung ist endotherm. Die benötigte Energie für die Reaktion wird dem Wärmeinhalt des Festbettes entnommen. Dadurch findet ein Abkühlen des Katalysatorbettes um etwa 10 bis 90°C statt. Die Temperaturänderung ist durch die Katalysatorzusammensetzung und durch den Inertgehalt der Schüttung einstellbar. Nach der Dechlorierung hat das Katalysatorbett weitgehend wieder das Temperaturprofi vor der Chlorierung angenommen. Das Ende der Chlorfreisetzung kann durch Messung des Chlorgehaltes im Produktgasstrom überwacht werden. Die pro Zeit freigesetzte Chlormenge und damit die Chlorkonzentration im Chlorgasstrom am Reaktorausgang nimmt mit der Zeit ab. Es kann sich empfehlen, die Chlorfreisetzung bereits abzubrechen, sobald die Chlorkonzentration einen Minimalwert unterschreitet. Hierdurch kann die erreichbare Raum-Zeit-Ausbeute erhöht werden. Bei dem kontinuierlichen Prozeß wird die Dauer der Chlorfreisetzung entweder zeitlich konstant gehalten oder über die Messung des Chlorgehaltes geregelt. Der Chlorgasstrom wird abgekühlt, in der Produktgasleitung 5 gesammelt und zur Aufarbeitung geleitet.

**4. Spülphase**

Nach der Dechlorierung ist der Gasraum im Festbett des Reaktors mit dem Oxidationsmittel und mit freigesetztem Chlor gefüllt. Vor der erneuten Chlorierung muß daher wieder über Leitung 3 mit einem trockenen Inertgas eine Spülphase erfolgen. Die Spüldauer beträgt mehrere Verweilzeiten, um die Gasphase mehrmals auszutauschen. Die Spülung kann in derselben oder in der entgegengesetzten Strömungsrichtung wie die Dechlorierung erfolgen. Das Ende der Spülphase ist dann erreicht, wenn das Reaktorausgangsgas kein Chlor mehr enthält, bzw. wenn ein vorgegebener Grenzwert unterschritten ist.

Zum Anfahren der Anlage wird vorgeheizte Luft oder Inertgas über Leitung 6 und Wärmetauscher 7 über die Festbette geleitet, um diese auf Reaktionstemperatur zu erwärmen.

Der Druck bei dem erfindungsgemäßen Verfahren beträgt etwa 0,5 bis 20 bar, bevorzugt etwa 1 bis 10 bar, wobei in dem einzelnen Prozeßschritten unterschiedliche Drücke vorliegen können.

Die Chlorierung und die Dechlorierung können periodisch nacheinander abfolgend durchgeführt werden, wobei die Dechlorierung der Chlorierung so folgt, daß die im Chlorierungsschritt im Katalysator gespeicherte Wärme die für die endotherme Dechlorierung benötigte Reaktionsenergie liefert.

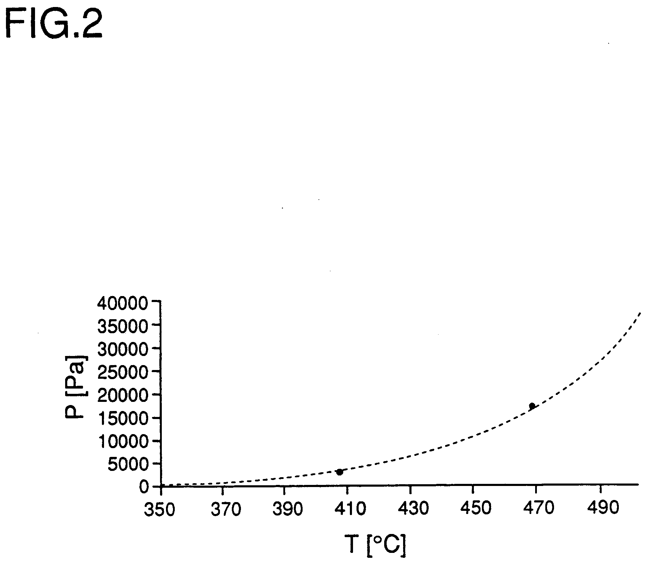

Aus der Literatur ist bekannt, daß Metallchloride, wie sie sich bei dem erfindungsgemäßen Verfahren ausbilden können, bereits bei Temperaturen von etwa 420°C einen nennenswerten Dampfdruck aufweisen. In Figur 2 ist beispielhaft, die Temperaturabhängigkeit des Dampfdruckes für $CuCl_2$ dargestellt; die Werte wurden von "Allen J.A., Clark A.J. Rev. Pure and Appl. Chem. 21 (1971) Seiten 145 bis 166" entnommen. Daher sind bei der Dechlorierung Temperaturen von deutlich mehr als 420°C zu vermeiden, da es sonst zu einer Desaktivierung des Katalysators kommen kann. Im allgemeinen empfiehlt es sich, die Dechlorierung in Abhängigkeit von der Katalysatorzusammensetzung bei Temperaturen von etwa 300 bis 450°C, bevorzugt 370 bis 420°C durchzuführen.

Die Temperatur bei der Chlorierung ist in Abhängigkeit von der Katalysatorzusammensetzung so zu wählen, daß nach Beendigung der exothermen Reaktion die aus Gründen der Flüchtigkeit der Metalloxide maximal zulässige Temperatur von etwa 380 bis 430°C nicht überschritten wird.

Die erfindungsgemäßen Reaktoren zur Durchführung des Verfahrens tragen den besonderen Erfordernissen der äußerst korrosiven Prozeßmedien, welche unter den Prozeßbedingungen teilweise als geschmolzene Metallchloride vorliegen, Rechnung.

Bei Dauerversuchen stellte sich heraus, daß selbst hochveredelte Legierungen wie Hastelloy C bei Kontakt mit den geschmolzenen Metallchloriden nur kurze Zeit geeignet waren und aufgrund gewisser Anforderungen an die Grundelastizität des Reaktors erwiesen sich auch Reaktoren aus keramischen Werkstoffen als schlecht geeignet.

Als für das Verfahren sehr gut geeignet erwiesen sich metallische Reaktoren, deren Innenbereich mit säurefesten keramischen Materialien ausgemauert wurde. Am sichersten erweist es sich, wenn der gesamte Reaktorinnenbereich ausgemauert ist. Aus Kostengründen kann es sich jedoch empfehlen, nur die Zone auszumauern, welche die Katalysator - bzw. Inertschüttung enthält, da nur in dieser relativ heißen Zone flüchtige Metallchloridschmelzen, welche für die rasche Zersetzung des Metalls maßgeblich sind, auftreten.

Als keramische Materialien eignen sich beispielsweise handelsübliche säurefeste Alumosilikate beispielsweise der Zusammensetzung 24 bis 26% $Al_2O_3$, 70 bis 74% $SiO_2$, 1 bis 2% $TiO_2$, 1 bis 2% $Fe_2O_3$. Die aus diesen Materialien hergestellten Formsteine können mit anorganischen säurefesten und ebenfalls handelsüblichen Bindern, beispielsweise Kaliwasserglasbindern, zur Ausmauerung zusammengeführt werden.

Die Schichtdicke der Ausmauerung beträgt üblicherweise etwa 1 bis 30 cm, bevorzugt 5 bis 10 cm.

Die Ausmauerungssteine sind nicht völlig gasdicht und es zeigt sich, daß Metallchloridschmelze teilweise in die Ausmauerungssteine diffundiert. Die Eindringtiefe ist jedoch gering. Bei Verwendung handelsüblicher, säurefester Ausmauerungssteine findet nur ein Eindringen der Schmelze in die Oberflächenschicht der Ausmauerungssteine statt. Selbst im Falle der Bildung von Spannungsrissen kann keine Metallchloridschmelze an die Reaktorwand gelangen. In der Ausmauerung liegt zur Reaktorwand hin ein Temperaturgefälle vor. Eindringende Metallchloridschmelze kühlt ab, erstarrt, wirkt im erstarrten Zustand nicht mehr korrosiv undführt dadurch gleichzeitig zu einer Abdichtung des Risses.

Der Reaktorein- bzw. -ausgang befindet sich nicht auf Reaktionstemperatur. Das Aufheizen bzw. Abkühlen der Reaktionsgase findet im wesentlichen regenerativ in den der Katalysatorschüttung vor bzw. nachgelagerten Inertschüttungen statt. Durch die periodische Strömungsumkehr wird gewährleistet, daß die anfangs beim Anfahrvorgang einmalig eingebrachte Wärme im wesentlichen im Festbettreaktor verbleibt und nicht mit der Gasströmung ausgetragen wird. Dadurch liegen außerhalb der Katalysatorschüttung praktisch keine geschmolzenen Metallchloride vor. Speziallegierungen wie beispielsweise Hastelloy C erweisen sich den wechselnden Zusammensetzungen der Gasphase gegenüber als beständig. Den gesamten Reaktorkörper aus Speziallegierung zu fertigen wäre teuer und ist unnötig. Als vorteilhafte konstruktive Gestaltung hat sich die Verwendung von mit Spezialstahl plattiertem einfachem Kesselstahl erwiesen. Der äußere Rahmen des zylindrischen Reaktors (beispielsweise 8 m lang, 2 m Durchmesser) dient zur Gewährleistung der benötigten Festigkeit und kann aus einfachem niedriglegiertem Kesselstahl wie H1 oder H2 gefertigt werden. Die Plattierung desReaktorinnenbereichs mit beispielsweise 2 bis 5 mm dicker Speziallegierung, beispielsweise Hastelloy C oder Inconel 600 oder einer vergleichbaren Legierung, dient zur Gewährleistung der Korrosionsbeständigkeit gegenüber den Gasphasenkomponenten. Durch die Ausmauerung im zylindrischen Mittelteil des Reaktors wird die Korrosionsbeständigkeit gegenüber der Metallchloridschmelze gewährleistet. Geeignete säurefeste Formsteine sind z.B. Schamottsteine (Alumosilikate), verbunden mit einem entsprechenden säurefesten Kitt (z.B. Kali-Wasserglas). Zur Verbesserung können vorteilhafterweise Keramikfasermatten in das Ausmauerungssystem eingebunden werden.

Die Größe der Reaktoren kann prinzipiell beliebig gewählt werden. Vorteilhafterweise wird der Durchmesser nicht wesentlich größer als 2 m gewählt, um eine unnötige Verdickung der Reaktorwand zurStabilitätsgewährleistung zu vermeiden. Das Längen zu Durchmesserverhältnis sollte, um schärfere Reaktionsfronten zu erreichen größer 2:1, vorzugsweise größer 4:1 gewählt werden. Die Länge des Reaktors wird durch den Druckverlust begrenzt. Für den kontinuierlichen Betrieb sind wenigstens zwei Reaktoren parallel zu schalten. Vorzugsweise werden aber drei oder mehr Reaktoren parallel im periodischen Wechsel eingesetzt, um die kontinuierliche Produktion zu vergleichmäßigen, eine höhere Flexibilität in der Auslastung zu haben, um Freiraum in der zeitlichen Dauer der einzelnen Reaktionsphasen (Chlorierung, Spülphasen Dechlorierung) zu erreichen und um gegebenenfalls im laufenden Produktionsbetrieb einen Reaktoraustausch vornehmen zu können. Das Aufheizen der Reaktoren erfolgt vorteilhafterweise durch vorgeheizte Luft, da die im oxidierten Zustand vorliegenden Übergangsmetalle nicht flüchtig sind und daher höhere Temperaturen(> 400°C) vertragen. DieTemperatur darf aber nicht so hoch gewählt werden, daß es zu einer chemischen Reaktion zwischen dem Trägermaterial und Übergangsmetallen kommt.

Mit Hilfe des erfindungsgemäßen Verfahrens läßt sich technisch einfach und wirtschaftlich ein praktisch vollständiger HCl-Umsatz erzielen und es können aufwendige Aufarbeitungsschritte vermieden werden. Durch die periodische Strömungsumkehr der Gasströme fungiert das Katalysatorfestbett als regenerativer Wärmetauscher. Hierdurch entfällt vorteilhafterweise eine aufwendige zusätzliche externe Wärmezu- bzw. -abfuhr was den Gesamtenergieverbrauch sowie den Aufwand für den Reaktor deutlich verringert.

Die erfindungsgemäßen Reaktoren lassen sich einfach und kostengünstig herstellen und bieten eine hohe Standzeit bei dem erfindungsgemäßen Verfahren.

**Beispiele**

Beispiel 1

In einem isolierten, beheizten Laborfestbettreaktor aus Quarz waren 0,590 kg Katalysator (20 Gew.-% $FeCl_3$ + KCl auf Träger) eingebaut. Die angegebenen Gewichtsprozente beziehen sich jeweils auf die Gesamtmasse. Der Kontakt wurde bei ca. 360°C nacheinander mit 117 Nl HCl/h beladen (Chlorierung), anschließend mit $N_2$ HCl-frei gespült und nachfolgend 20 min mit 12 Nl/h reinem Sauerstoff oxidiert (dechloriert). Vor der nachfolgenden erneuten Chlorierung wurde zur Entfernung von $O_2$ und $Cl_2$ erneut mit $N_2$ gespült.

ΔT beschreibt die Temperaturänderung in der Mitte des Festbettes während der angegebenen Reaktionsdauer.

| | Dauer [s] | Chlorabgabe/-aufnahme [mol Cl] | Raum-Zeit-Ausbeute [g Chlor/h/kg Kat.] | DT [°C] |
|---|---|---|---|---|
| 1. Chlorierung[*1] | 1016 | 1,48 | 316 | 75 |
| 1. Oxidation | 200 | 0,21 | 37 | -8 |
| 2. Chlorierung | 153 | 0,22 | 315 | 47 |
| 2. Oxidation | 1200 | 0,22 | 41 | -11 |
| 3. Chlorierung | 137 | 0,2 | 316 | 49 |
| 3. Oxidation | 1200 | 0,20 | 37 | -10 |
| 4. Chlorierung | 138 | 0,20 | 315 | 48 |
| 4. Oxidation | 1200 | 0,23 | 42 | -7 |
| 5. Chlorierung | 151 | 0,22 | 315 | 47 |
| 5. Oxidation[*2] | 1200 | 0,16 | 29 | -6 |
| 6. Chlorierung | 123 | 0,18 | 317 | 44 |
| 6. Oxidation | 1200 | 0,17 | 31 | -9 |
| 7. Chlorierung | 108 | 0,16 | 317 | 42 |
| 7. Oxidation[*2] | 1200 | 0,17 | 30 | -5 |

[*1] Erstchlorierung nach Oxidation des Kontaktes über Nacht.
[*2] Oxidation mit 6 Nl $O_2$/h.

Beispiel 2

Analog Beispiel 1, Beladung mit 114 Nl HCl/h.

| | Dauer [s] | Chlorabgabe/-aufnahme [mol Cl] | Raum-Zeit-Ausbeute [g Chlor/h/kg Kat.] | DT [°C] |
|---|---|---|---|---|
| 1. Chlorierung[1] | 1087 | 1,53 | 305 | 75 |
| 1. Oxidation | 1200 | 0,20 | 35 | -13 |
| 2. Chlorierung | 167 | 0,24 | 304 | 42 |
| 2. Oxidation | 1200 | 0,20 | 36 | -18 |
| 3. Chlorierung | 1171 | 0,24 | 305 | 45 |
| 3. Oxidation | 600 | 0,18 | 65 | -10 |
| 4. Chlorierung | 154 | 0,22 | 305 | 39 |
| 4. Oxidation | 600 | 0,17 | 62 | -5 |
| 5. Chlorierung | 115 | 0,16 | 305 | 35 |
| 5. Oxidation | 600 | 0,17 | 60 | -15 |
| 6. Chlorierung | 133 | 0,19 | 306 | 36 |
| 6. Oxidation[2] | 600 | 0,17 | 62 | -15 |
| 7. Chlorierung | 120 | 0,17 | 305 | 37 |
| 7. Oxidation | 600 | 0,18 | 66 | -18 |

[1] Erstchlorierung nach Oxidation des Kontaktes über Nacht.
[2] Oxidation mit 30 Nl Luft/h.

Beispiel 3

Analog Beispiel 1, Beladung mit 113 Nl HCl/h.

| | Dauer [s] | Chlorabgabe/-aufnahme [mol Cl] | Raum-Zeit-Ausbeute [g Chlor/h/kg Kat.] | DT [°C] |
|---|---|---|---|---|
| 1. Chlorierung[1] | 1195 | 1,67 | 303 | 80 |
| 1. Oxidation | 1200 | 0,24 | 42 | -16 |
| 2. Chlorierung | 234 | 0,33 | 303 | 56 |
| 2. Oxidation | 1200 | 0,21 | 38 | -14 |
| 3. Chlorierung | 203 | 0,28 | 303 | 52 |
| 3. Oxidation | 1200 | 0,22 | 39 | -6 |
| 4. Chlorierung | 226 | 0,32 | 303 | 54 |
| 4. Oxidation[2] | 1200 | 0,22 | 40 | -25 |
| 5. Chlorierung | 187 | 0,26 | 303 | 48 |
| 5. Oxidation[2] | 1200 | 0,24 | 44 | -11 |
| 6. Chlorierung | 181 | 0,25 | 302 | 45 |
| 6. Oxidation[2] | 1200 | 0,25 | 44 | -14 |

[1] Erstchlorierung nach Oxidation des Kontaktes über Nacht.
[2] Oxidation mit 60 Nl Luft/h.

Beispiel 4

In einem Röbrenfestbettreaktor wurden ca. 20 ml eines besonders geeigneten Katalysators (6,5 Gew.-% Cu und 8,1 Gew.-% Fe auf SiC-Granulat) eingesetzt. Der Kontakt wurde bei 380°C mit reinem gasförmigen HCl bis zum HCl-Durchbruch mit einer Belastung von 750l/h beladen. Die Chlorierungsdauer betrug 6,5 min. Anschließend wurde 2,4 min mit $N_2$ gespült. Die Dechlorierung (Katalysatoroxidation) erfolgte bei 400°C mit einer Belastung von 600l/h mit reinem Sauerstoff. Die Dechlorierdauer betrug 6,5 min. Das Produktgas enthielt im Maximum >27 Vol.-% $Cl_2$, im Mittel 23 Vol.-% $Cl_2$. Anschließend wurde 4 min mit $N_2$ gespült. Über einen kompletten Zyklus gerechnet wurde aufgrund des verbesserten Katalysators, der leicht erhöhten Temperatur und der kürzeren Zykluszeit eine Raumzeitausbeute von > 100 g Chlor/h/kg Kat. erreicht.

Der Chlorierungs-Oxidations-Zyklus wurde 32mal mit verschiedenen Beladungsraten, Reaktionstemperaturen und Beladungsgeschwindigkeiten wiederholt. Es wurden stets vergleichbaren Resultate erzielt. Beim Katalysator wurde kein Aktivitätseinbruch festgestellt.

Beispiel 5

Die Versuchsdurchführung ist vergleichbar zu Beispiel 4, mit einem vergleichbaren Katalysator. Die Beladungstemperatur betrug ausnahmsweise 425°C. Die Dechlorierung mit $O_2$ (5 Nl/h) wurde solange betrieben, bis der Chlorgehalt im Reaktorausgangsgas unter 10 Vol.-% abgesunken war.

a) Die Beladung erfolgte mit 25 % HCl in $N_2$ bis zum HCl-Durchbruch (nach 6 min). Nach 5 min Dechlorierungsdauer wurde die 10 Vol.-% Chlorgrenze im Produktgasstrom unterschritten. Der maximale Chlorgehalt betrug 20 Vol.-%, der über die Dechlorierungszeit gemittelte mittlere Chlorgehalt ca. 12 Vol.-%.

b) Die Beladung erfolgte 40 min lang mit 50 % HCl in $N_2$ über den HCl-Durchbruch hinaus. Erst nach 7,8 min Dechlorierungsdauer wurde die 10 Vol.-% Chlorgrenze im Produktgasstrom unterschritten. Der maximale Chlorgehalt betrug 50 Vol.-%, der über die Dechlorierungszeit gemittelte mittlere Chlorgehalt ca. 33 Vol.-%.

Der Katalysator hat demzufolge bei längerer Beladungszeit mehr an Chlor aufgenommen, die Chlorkonzentration im Dechlorierungsschritt wird dadurch höher, der Katalysatorausnutzungsgrad steigt.

**Patentansprüche**

1. Verfahren zur Herstellung von Chlor aus einem Chlorwasserstoff enthaltenden Gas durch Umsetzung in einem einen Deacon-Katalysator enthaltenden Reaktor bei erhöhter Temperatur, vorzugsweise bei 300 bis 450°C, dadurch gekennzeichnet, daß man

a) in einer ersten Stufe ein Chlorwasserstoff enthaltendes Gas in den Reaktor einführt und durch Reaktion zwischen dem Deacon-Katalysator und dem Chlorwasserstoff Wasser und am Katalysator fixierte Chlorverbindungen gebildet werden, wobei sich die Temperatur im Reaktor um 10 bis 90°C erhöht und man das Wasser aus dem Reaktor abführt und nach Beendigung der ersten Stufe den Reaktor mit einem Inertgas spült und anschließend

b) in einer zweiten Stufe dem Reaktor ein gasförmiges Oxidationsmittel zuführt, welches eine Umsetzung der zuvor gebildeten Chlorverbindungen unter Freisetzung von Chlor, welches man aus dem Reaktor abführt, ermöglicht und anschließend den Reaktor mit einem Inertgas spült.

2. Verfahren nach Anspruch 1, dadurch gekennzeichnet, daß man den Chlorwasserstoff der ersten Stufe und das gasförmige Oxidationsmittel der zweiten Stufe in entgegengesetzter Richtung durch den Reaktor leitet.

3. Verfahren nach Anspruch 1 oder 2, dadurch gekennzeichnet, daß das Oxidationsmittel Sauerstoff ist.

4. Verfahren nach einem der Ansprüche 1 bis 3, dadurch gekennzeichnet, daß der Deacon-Katalysator als Festbett eingesetzt wird.

5. Verfahren nach einem der Ansprüche 1 bis 4, dadurch gekennzeichnet, daß man einen Reaktor einsetzt, welcher eine Zone der Katalysatorschüttung aufweist, die mit säurebeständigen keramischen Materialien ausgemauert ist.

6.  Verfahren nach einem der Ansprüche 1 bis 5, dadurch gekennzeichnet, daß der Deacon-Katalysator sich zusammensetzt aus

    - einzelnen oder mehreren Aktivmetallkomponenten, die in oxidischer oder chloridischer Form vorgelegt werden, ausgewählt aus der Gruppe Cu, Fe, Ru, Ce, Bi, Ni, Co, Ga, Nd,

    - einzelnen oder mehreren Alkalimetallchloriden, ausgewählt aus der Gruppe LiCl, NaCl, KCl,

      und/oder $ZnCl_2$

      und/oder $CaCl_2$

    - auf keramischen, silikatischen oder Glasträgern,

    wobei die Aktivkomponentenbeladung, berechnet als Gewichtsanteile der Metalle, zwischen 2 bis 30 Gew.-%, bevorzugt zwischen 5 bis 20 Gew.-%, und die Alkalichloridbeladung zwischen 0 bis 30 Gew.-% Alkalichlorid, bevorzugt zwischen 0 bis 20 Gew.-% liegt.

7.  Verfahren nach Anspruch 6, dadurch gekennzeichnet, daß der Träger basiert auf keramischen Trägern, ausgewählt aus der Gruppe SiC, $Si_3N_4$, BN, $B_4C$, WC, TiC, TiN, ZrN, AlN, besonders bevorzugt SiC und/oder $Si_3N_4$.

8.  Verfahren nach Anspruch 6 oder 7, dadurch gekennzeichnet, daß der Träger ein makroporöser keramischer Träger ist, vorzugsweise ein makroporöser SiC- und/oder $Si_3N_4$-Träger.

9.  Verwendung von Reaktoren, welche eine Zone der Katalysatorschüttung aufweisen, die mit säurebeständigen keramischen Materialien ausgemauert ist, zur Herstellung von Chlor gemäß Ansprüchen 1 bis 8.

# FIG.1

# FIG.2

Europäisches
Patentamt

# EUROPÄISCHER RECHERCHENBERICHT

Nummer der Anmeldung

EP 96 11 4460

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | WO 91 06505 A (UNIV SOUTHERN CALIFORNIA) 16.Mai 1991<br>* Seite 5, Zeile 7 - Seite 12, Zeile 15 *<br>* Seite 14, Zeile 33 - Seite 15, Zeile 26 * <br>--- | 1,3,4,6 | C01B7/04 |
| X | IND. ENG. CHEM. RES., Bd. 33, 1994, Seiten 2996-3003, XP000575187 H. Y. PAN ET AL.: "Process for converting hydrogen chloride to chlorine"<br>* Seite 2998, Spalte 1, Absatz 2 - Seite 3002, Spalte 1, Absatz 1 *<br>--- | 1,3 | |
| X | EP 0 283 198 A (MITSUI TOATSU CHEMICALS) 21.September 1988<br>* Seite 2, Zeile 38 - Zeile 53 *<br>* Seite 3, Zeile 21 - Seite 4, Zeile 10 *<br>--- | 9 | |
| X | FR 2 643 893 A (ESPAN CARBUROS METAL) 7.September 1990<br>* Seite 1, Zeile 27 - Seite 2, Zeile 32 *<br>* Seite 3, Zeile 20 - Zeile 21 *<br>* Seite 6, Zeile 20 - Seite 7, Zeile 12 *<br>--- | 1,3,6 | RECHERCHIERTE SACHGEBIETE (Int.Cl.6)<br><br>C01B |
| A | US 3 210 158 A (W. F. ENGEL ET AL.) 5.Oktober 1965<br>* Spalte 1, Zeile 11 - Spalte 3, Zeile 27 *<br>--- | 1,6 | |
| A | DATABASE WPI Week 7337 Derwent Publications Ltd., London, GB; AN 54282 XP002020199 & JP 48 029 038 A (MITSUI TOATSU CHEMICAL) , 1973<br>* Zusammenfassung *<br>----- | 1,6,7 | |

Der vorliegende Recherchenbericht wurde für alle Patentansprüche erstellt

| Recherchenort | Abschlußdatum der Recherche | Prüfer |
|---|---|---|
| DEN HAAG | 4.Dezember 1996 | Van der Poel, W |